# EUROPEAN PATENT APPLICATION

(11) **EP 1 308 901 A2**
(43) Date of publication of application: **07.05.2003**
(21) Application number: 02254817.6
(22) Date of filing: 09.07.2002
(51) Int. Cl.: G06T 15/40

(54) **Display apparatus and display method**

(30) Priority: 02.08.2001 JP 2001235233
(71) Applicant: MATSUSHITA ELECTRIC INDUSTRIAL CO., LTD., Kadoma-shi, Osaka 571-8501 (JP)
(72) Inventor: Wakayama, Yorihiko, Ibaraki-shi, Osaka (JP)
(74) Representative: Dempster, Benjamin John Naftel

(57) **Abstract**

This invention relates to a display apparatus that displays objects that are located in a virtual 3-dimensional space. A calculation means calculates the distance between the viewpoint position when displaying an object, and the center position of a minimum encompassing sphere, which is the smallest sphere that will contain the object. A selection means selects an object to display from among display candidates based on the distance and the diameter of the minimum encompassing calculated by the calculation means. In this invention, objects to be displayed are selected in this way from among display candidates based on the diameter of the minimum encompassing sphere of the shape data and the object-to-viewpoint distance. Therefore, it is possible to keep the number of missing objects that are supposed to be displayed to a minimum without having to improve the drawing performance of 3-dimensional graphics.

## Description

This invention relates to a display apparatus for displaying objects that are located in a virtual 3-dimensional space.

In recent years, apparatuses (for example, car-navigation apparatuses and game machines), which place objects in a virtual 3-dimensional space of a computer and displays an image of that object as it was taken by a virtual camera on a display such as a CRT display, have become popular in typical households.

It is sometimes necessary for these kinds of display apparatuses to display an image as if it were moving. For example, in the case of a car-navigation apparatus, it is necessary to display an image such that the surrounding landscape appears to move with respect to the moving viewpoint. Also, in the case of a game machine, it is sometimes desirable to display a specific object (for example, an enemy character) such that the background moves with respect to the movement of the object.

In order to display an image in this way such that it appears to move, it is necessary to create more than thirty frames of images per second. Therefore, depending on the processing capability of the CPU (Central Processing Unit), there is a possibility that the computing process required for creating the image will not be able to keep up with the display process, and when that happens, there is a problem in that important images are often not displayed. Conventionally, movement has been somewhat maintained by displaying the image in order starting from the front objects, or in other words not displaying the objects in the back.

However, in the case of a car-navigation device, it is desirable to display objects, such as the Tokyo Tower or the like, that are still large even when far away. Also, in the case of a game machine, it is desirable to display important objects, such as enemy characters or the like, even when they are far away.

However, conventionally, since images have been displayed in order starting from the objects in the front, there has been a problem in that, as long as the ability for drawing 3-dimensional graphics is not improved, some objects that were supposed to be displayed were not displayed, or in other words, some objects that were supposed to be displayed were missing.

Moreover, particularly in the case of a car-navigation apparatus, correlating the image to be displayed on the display with the actual scene is important. For example, by drawing close objects in high detail and far objects in low detail, the image becomes closer to the actual scene.

However, conventionally, both close objects and far objects were drawn using a single method. Therefore, the user of a car-navigation apparatus had the feeling that the image displayed on the display did not coincide with the actual scene.

In consideration of the problems with the prior art mentioned above, the objective of this invention is to provide a display apparatus that is capable of keeping the number of missing objects that are supposed to be displayed to a minimum even without improving the drawing performance for 3-dimensional graphics, and that is capable of displaying an image that coincides with the actual scene. In order to accomplish this object, the display apparatus for displaying objects that are located in a virtual 3-dimensional space of this invention comprises a calculation means and a selection means, which will be explained below.

In other words, the calculation means calculates the distance between the position of the viewpoint when displaying an object and the position of the center of the minimum encompassing sphere, which is the smallest sphere that contains the object. Then, based on the distance calculated by the calculation means and the diameter or radius of the minimum encompassing sphere, the selection means selects the object to be displayed from among display candidates.

As described above, in this invention, the object to be displayed is selected from among display candidates based on the diameter or radius of the minimum encompassing sphere of the shape data and the distance between the object and the viewpoint. Therefore, it is possible to keep the number of missing objects that are supposed to be displayed to a minimum without having to improve the drawing performance for 3-dimensional graphics.

Furthermore, the calculation means calculates the distance between the position of the viewpoint when displaying the object and the position of the center of the minimum encompassing sphere, which is the smallest sphere that contains the object. Then, based on the distance calculated by the calculation means, the selection means selects the most suitable shape data from among a plurality of shape data having varying degrees of detail as the data to display.

As described above, in this invention, the most suitable shape data are selected from among a plurality of shape data having varying degrees of detail. Therefore, it is possible to draw close objects in high detail and far objects in low detail. In addition, there is a merit in that it is possible to reduce the amount of time required for drawing far objects.

Furthermore, the calculation means calculates the distance between the position of the viewpoint when displaying the object and the position of the center of the minimum encompassing sphere, which is the smallest sphere that contains the object. Then, based on the distance calculated by the calculation means, the selection means selects the most suitable texture data from among a plurality of texture data having varying resolution.

As described above, in this invention, the most suitable texture data are selected from among a plurality of texture data having varying degrees of detail. Therefore, it is possible to draw near objects with a realistic texture, and to draw far objects with a more simple texture.
Fig. 1 is a block diagram showing the basic features of the display apparatus of the present invention.
Fig. 2 is a flowchart showing the operation of the display apparatus of a first embodiment of the present invention.
Fig. 3 is a flowchart showing the operation of the display apparatus of a second embodiment of the present invention.
Fig. 4 is a flowchart showing the operation of the display apparatus of a third embodiment of the present invention.
Fig. 5 is a drawing for explaining the minimum encompassing sphere.
Fig. 6A, Fig. 6B and Fig. 6C are drawings for explaining the minimum encompassing sphere.
Fig. 7 is a drawing for explaining the minimum encompassing sphere.
Fig. 8 is a drawing for explaining the relationship between the object and the viewpoint.
Fig. 9 is a drawing for explaining the inner product.
Fig. 10 is a drawing for explaining the relationship between the inner product and the threshold value.
Fig. 11 is a drawing for explaining the solid angle.
Fig. 12 is a drawing for explaining the relationship between the solid angle and the threshold value.
Fig. 13A and Fig. 13B are drawings for explaining the technique of selecting the most suitable shape data.
Fig. 14A is drawings for explaining the technique of selecting the most suitable texture data and
Fig. 14B is drawings for explaining the technique of selecting the most suitable texture data too.

The preferred embodiments of the invention will be explained in detail below based on the drawings.

### Embodiment 1

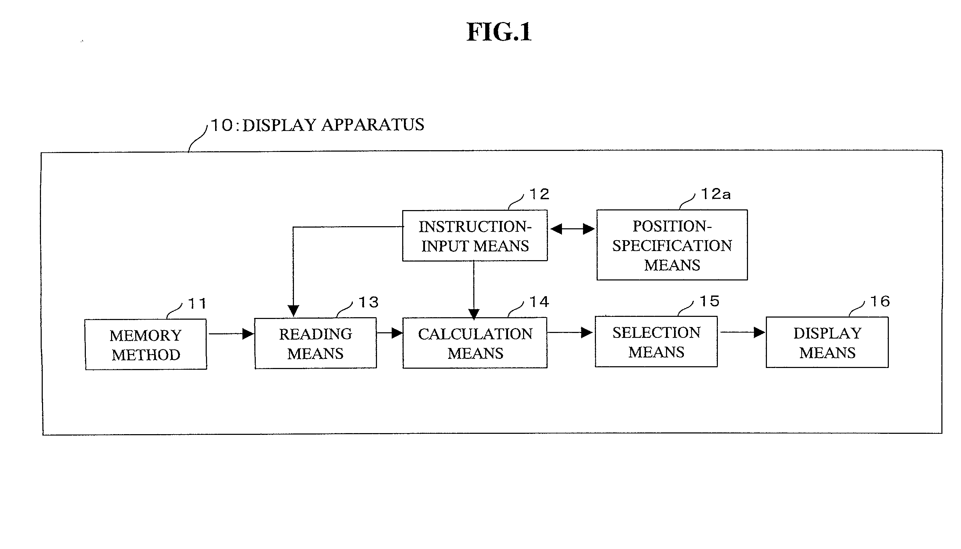

Fig. 1 is a block diagram of the basic features of the display apparatus 10 of this invention. The construction and operation of the display apparatus will be explained below.

First, the diameters and coordinates of the centers of the minimum encompassing spheres for all of the objects to be displayed are found. The minimum encompassing sphere, as will be explained below, is the smallest sphere that contains an object in a virtual 3-dimensional space.

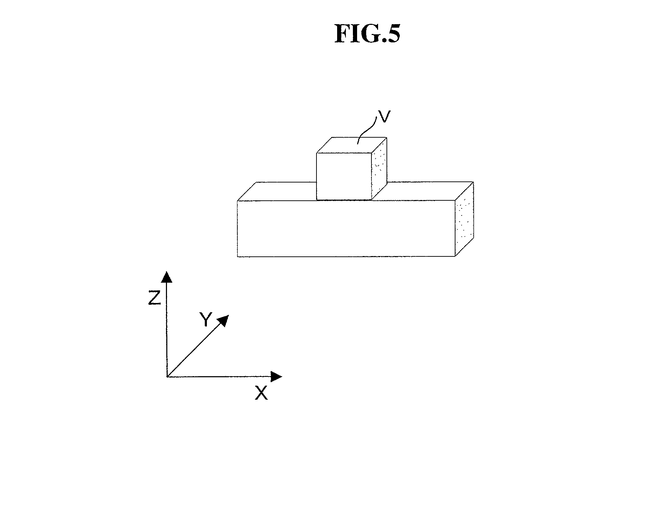

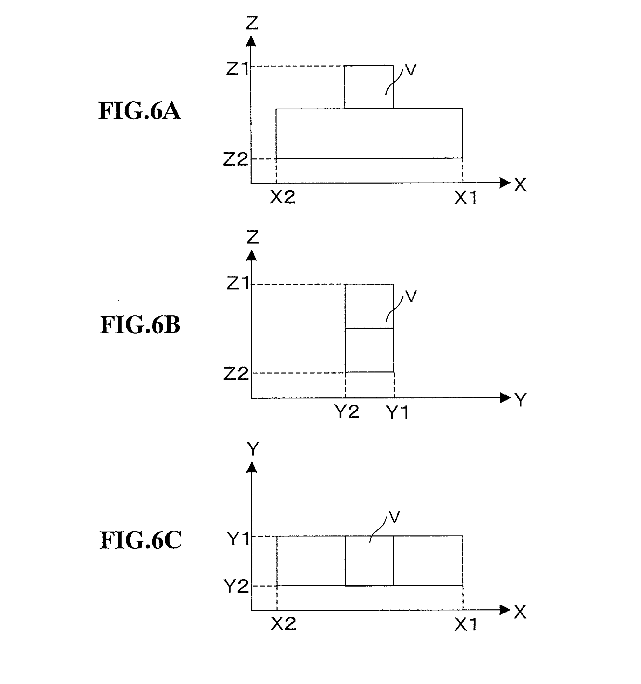

An example of the method for finding the diameter and the coordinates of the center of the minimum encompassing sphere around an object V in a virtual 3-dimensional space is shown in Fig. 5. Fig. 6A shows the X-Z plane of the object V, Fig. 6B shows the Y-Z plane of the object V and Fig. 6C shows the X-Y plane of the object V.

First, the average value Xa of the maximum X coordinate X1 and the minimum X coordinate X2 of the shape data of the object V is found, as well as the average value Ya of the maximum Y coordinate Y1 and the minimum Y coordinate Y2 and average value Za of the maximum Z coordinate Z1 and the minimum Z coordinate Z2. These coordinates (Xa, Ya, Za) are taken to be the center of the minimum encompassing sphere.

Also, the difference Xb between the maximum X coordinate X1 and the minimum X coordinate X2 of the shape data of the object V is found, as well as is the difference Yb between the maximum Y coordinate Y1 and the minimum Y coordinate Y2, and the difference Zb between the maximum Z coordinate Z1 and the minimum Z coordinate Z2. The largest value among these differences Xb, Yb and Zb (for example Xb in the case Xb > Yb > Zb) is taken to be the diameter of the minimum encompassing sphere.

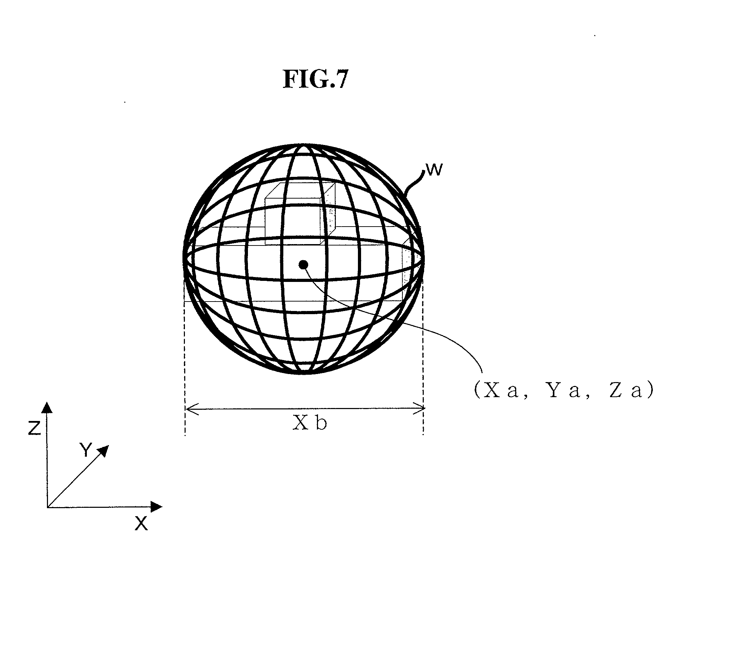

In this way, it is possible to find the minimum encompassing sphere W of the object V as shown in Fig. 7. Of course, the position of the center of this minimum encompassing sphere W is at the coordinates Xa, Ya, Za, and the diameter of the sphere is Xb.

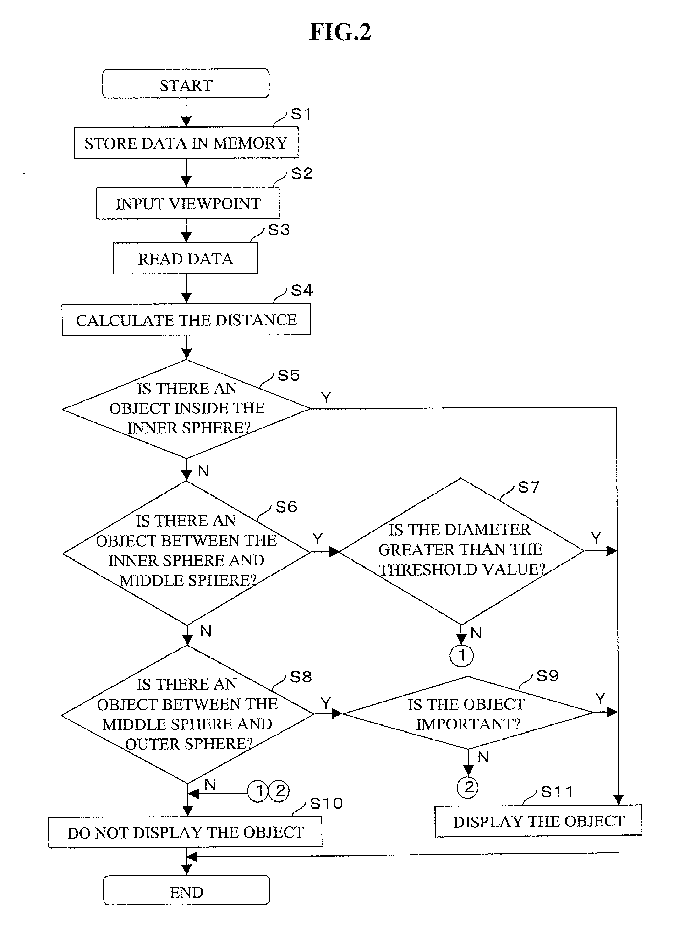

Next, the diameter and coordinates of the center of the minimum encompassing sphere are correlated to the shape data of the object V, and that correlation is stored in a memory 11, such as a hard disk, in advance (step S1 in Fig. 2).

Attribute data of the minimum encompassing sphere, which are correlated to the shape data and stored in memory in this way, are not limited to the center coordinates and the diameter. For example, instead of the diameter of the minimum encompassing sphere, it is possible to store the radius of the minimum encompassing sphere in memory, and a similar effect is obtained by finding the diameter from this radius.

In the case of where the display apparatus is a car-navigation apparatus, the user enters instructions for the desired location using an instruction-input means 12. In this way, the coordinates of the viewpoint when displaying an object are read from the instruction-input means 12 by a reading means 13 and input to a calculation means 14 (step S2 in Fig. 2).

In order to determine the viewpoint coordinates, the current position of the display apparatus 10 and the direction of movement must be specified. This current position can be obtained from a position-specification means 12a such as a GPS (Global Positioning System) that is installed in the display apparatus 10. Also, the direction of movement can be specified based on the destination that were entered as described above and the current position of the display apparatus 10.

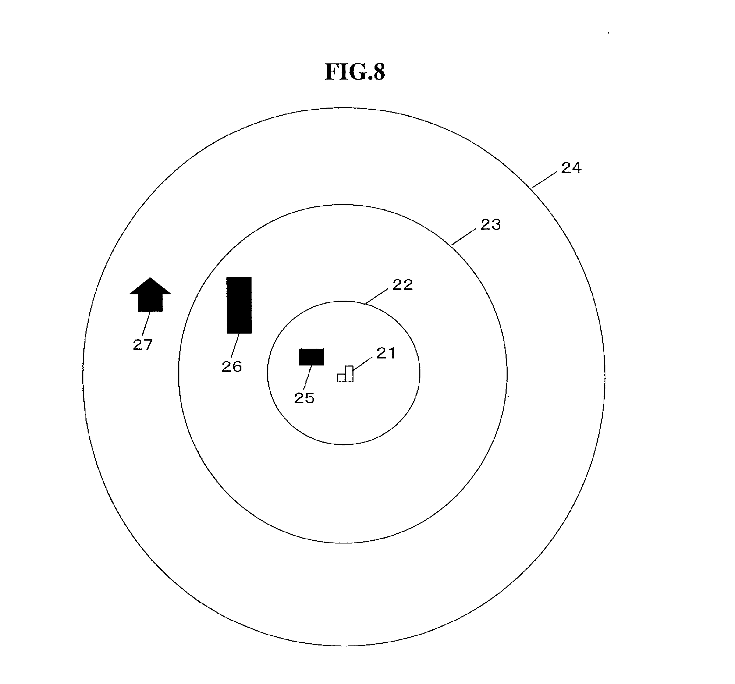

As shown in Fig. 8, the reading means 13 that obtained the viewpoint coordinates reads from the memory 11 shape data 25, 26, 27 for the objects that can be seen from the viewpoint 21, and gives that data over to the calculation means 14 (step S3 in Fig. 2).

The method for specifying the shape data of the objects that can be seen from a certain viewpoint (also called 'display candidates' below) can be the normal method. For example, normally, since in all practicality, objects that are further than a certain distance from the viewpoint coordinates cannot be seen, shape data for those objects can be eliminated as display candidates.

Here, the inner sphere 22, middle sphere 23 and outer sphere 24, which are shown in Fig. 8, all have the viewpoint 21 as their respective center. In addition, the radius of the spheres increases in the order of inner sphere 22, middle sphere 23 and outer sphere 24.

Of course, these spheres 22, 23, 24 themselves are not the objects to be displayed. In other words, these spheres 22, 23, 24 just function as thresholds that are used when selecting the objects to be displayed from among the display candidates. (This will be explained later.)

Next, the calculation means 14 calculates the distance between the objects and the viewpoint (hereafter this distance will be called the object-to-viewpoint distance L) based on the viewpoint coordinates that were obtained from the instruction-input method 12 and the center coordinates of the minimum encompassing spheres of the shape data 25, 26, 27 that were obtained from the reading means 13. The object-to-viewpoint distances that are calculated in this way are then correlated with the shape data 25, 26, 27 and given over to a selection means 15 (step S4 in Fig. 2).

Here, the selection means 15 selects the objects to be displayed from among the display candidates.

For example, the shape data 25 for the objects inside the inner sphere 22 are given over to a display means 16 such as a display to be displayed. In this way, all of the near objects are displayed regardless of their size (steps S5 and S11 in Fig. 2).

The 'objects inside the inner sphere 22' are objects object whose object-to-viewpoint distance L is less than the radius r1 of the inner sphere 22.

Also, shape data 26 for an object between the inner sphere 22 and middle sphere 23 are given over to the display means 16 to be displayed when the diameter of the minimum encompassing sphere is greater than a threshold value. In this way, for example in the case of the Tokyo Tower, objects that are large even though they are far away are displayed (steps S6, S7 and S11 in Fig. 2).

The 'objects between the inner sphere 22 and middle sphere 23' are objects whose object-to-point distance L is greater than the radius r1 of the inner sphere 22 and less than the radius r2 of the middle sphere 23.

Furthermore, shape data 27 for objects between the middle sphere 23 and outer sphere 24 are only given over to the display means 16 when those objects are important objects. In this way, for example in the case of an enemy character, objects that are important even though they are far away are displayed (step S8, S9 and S11 in Fig. 2).

The 'objects between the middle sphere 23 and outer sphere 24' are objects whose object-to-viewpoint distance L is greater than the radius r2 of the middle sphere 23 and less than the radius r3 of the outer sphere 24.

In order to determine whether an object is important or not, a flag, indicating whether or not an object should always be displayed, can be set for the shape data of the object and stored in advance in the memory 11. This makes it possible to determine by the selection means 15 the importance of each object.

For example, shape data whose constant-display flag value is '1' can be determined to be shape data for an important object. On the other hand, shape data whose constant-distant display flag is '0' can be determined to be shape data for an object that is not important.

As described above, in this embodiment of the invention, objects to be displayed are selected from among display candidates based on the diameter of the minimum encompassing sphere of the shape data and the object-to-viewpoint distance L. Therefore, it is possible to keep the number of missing objects that should be displayed to a minimum without having to improve the drawing performance of 3-dimensional graphics.

In the explanation above, an example was given of dividing the range of display candidates into the three stages: within an inner sphere 22, between the inner sphere 22 and a middle sphere 23, and between the middle sphere 23 and an outer sphere 24, however, the number of stages is not particularly limited to this.

Also, in the explanation above, the shape data 26 of objects between the inner sphere 22 and middle sphere 23 are to be displayed when the diameter of the minimum encompassing sphere is greater than a threshold value, and the shape data 27 of objects between the middle sphere 23 and outer sphere 24 are to be displayed only when the objects are important. However, the invention is not limited to this.

For example, it is possible to use an opposite form (in other words, a form where the shape data 26 for the objects between the inner sphere 22 and middle sphere 23 are to be displayed only when the objects are important objects, and the shape data 27 for the objects between the middle sphere 23 and the outer sphere 24 are displayed when the diameter of the minimum encompassing sphere is greater than a threshold value. Also, in the explanation above, the importance of the objects that are between the inner sphere 22 and middle sphere 23 is not determined, however, it is also possible to determine the importance of the objects in this area as well.

Moreover, in the explanation above, the center coordinates and diameter of the minimum encompassing sphere is correlated to the shape data for the object and stored in memory 11 in advance, however, the invention is not limited to this. In other words, when categorizing objects according to different height levels (single-level object, two-level object, three-level object, etc.), it is effective to store height data, which expresses which height level the object belongs to. In this case, the taller a building is, the higher its display priority is.

There are also cases when it is desirable to display a wide building even though its height is single level. In this case, the building in question is not selected as an object to be displayed, even though selection is based on height data. However, by applying the concept of a minimum encompassing sphere as described above, an object whose height or width exceeds the threshold becomes an object to be displayed, so it is possible to display a wide building even though it is a single-level building.

Furthermore, in the explanation above, before starting the display process (in other words, when storing the shape data in the memory 11) the center coordinates and diameters of the minimum encompassing spheres were found, however, the invention is not limited by this. That is, there is no problem in first storing just the shape data, and then finding the center coordinates and diameters of the minimum encompassing spheres when the shape data are read and input to the calculation means 14 via the reading means 13.

### Embodiment 2

A person is very perceptive to changes in the area near the point where the line of sight is fixed (point of fixation). Therefore, in this embodiment of the invention, objects near the point of fixation are selected as objects to be displayed.

Only the points of this embodiment that differ from those of the first embodiment will be explained here.

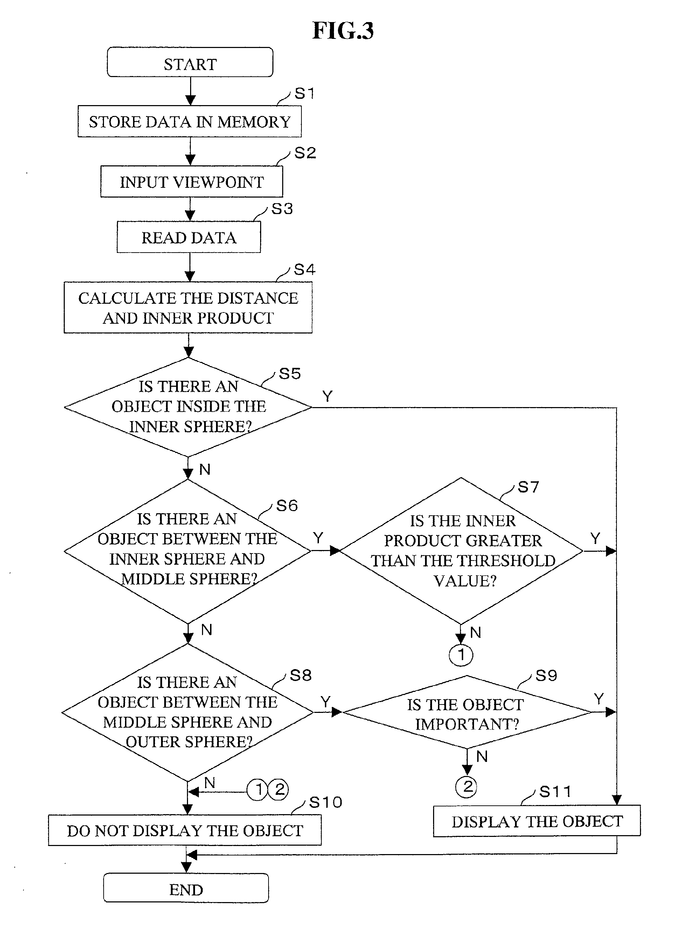

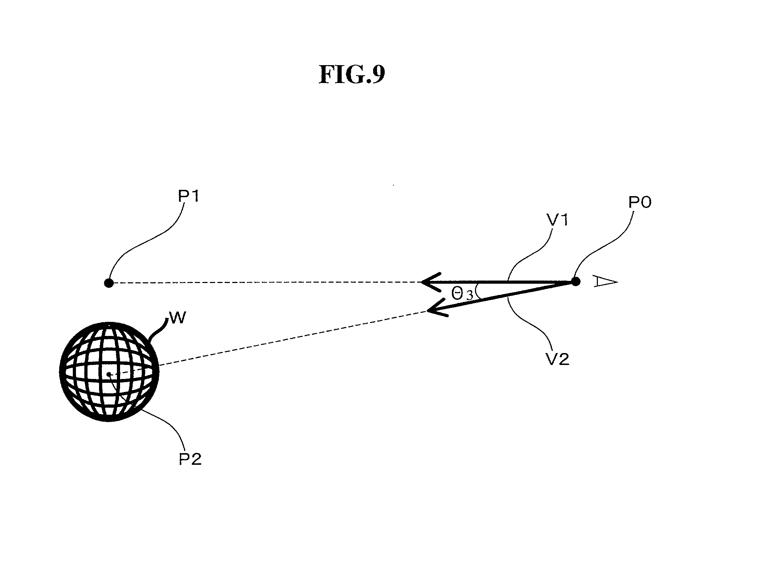

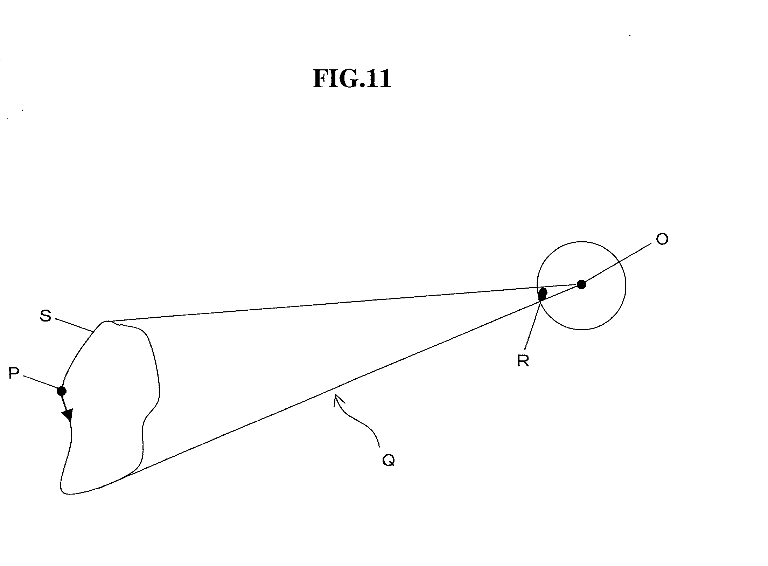

First, the shape data for the objects are given over to the calculation means 14 from the reading means 13 using the same procedure as in the first embodiment. In this way, as shown in Fig. 9, the calculation means 14 calculates the inner product of a vector V1 in the direction that connects the position of the viewpoint P0 and the point of fixation P1 and a vector V2 in the direction that connects the position of the viewpoint P0 and the center P2 of the minimum encompassing sphere W (cos θ3, where θ3 is the elongation angle between both vectors V1, V2). The inner product that is calculated in this way is correlated with the shape data 25, 26, 27 and given over to the selection means 15 (step S4 in Fig. 3).

Here, the selection means 15 selects the objects to be displayed from among these candidates.

For example, the shape data 25 for objects that are within the inner sphere 22 are given over to a display means 16 such as a display to be displayed. In this way, all of those objects are displayed regardless of whether or not their position is near the point of fixation (step S5 and S11 in Fig. 3).

Moreover, the shape data 26 for objects that are between the inner sphere 22 and middle sphere 23 are given over to the display means 16 as objects to be displayed when their inner product is greater than a threshold value. In this way, objects that are near the point of fixation become objects to be displayed even though they are far way (step S6, S7 and S11 in Fig. 3).

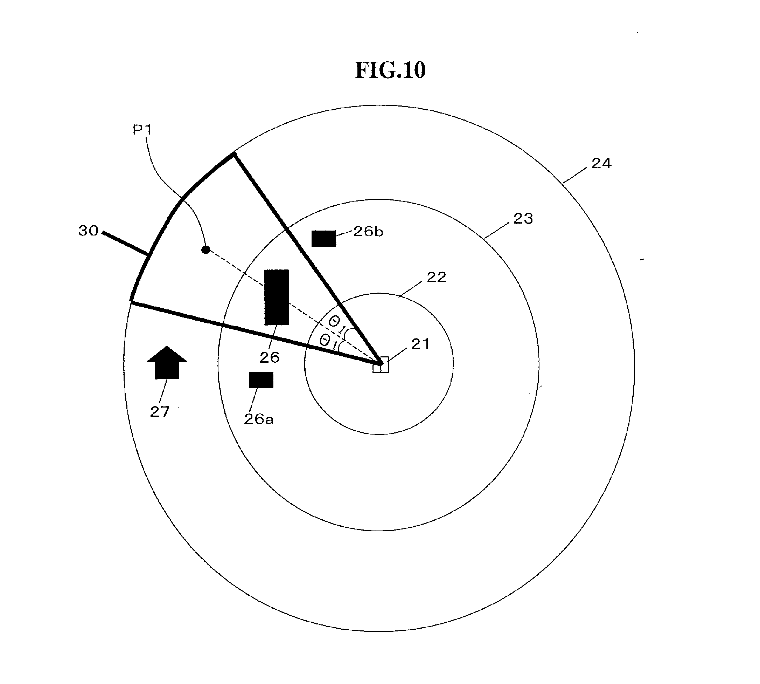

Here, Fig. 10 will be used to explain in detail the relationship between the inner product and threshold value.

First, it is presumed that the point of fixation is at the position P1 and that the threshold value is cos θ1.

An inner product that is greater than the threshold value means that the object is in an area 30 that includes the point of fixation P1. On the other hand, an inner product that is less than the threshold value means that the object is not in the area 30 that includes this point of fixation P1.

For example, shape data 26 for objects that are between the inner sphere 22 and middle sphere 23 have an inner product that is greater than the threshold value (in other words, the objects are in the area 30), so the data are given over to the display means 16 to be displayed. On the other hand, shape data 26a or 26b for objects that are between the inner sphere 22 and middle sphere 23 have an inner product that is less than the threshold value (in other words, the objects are not in the area 30), so will not be displayed.

Furthermore, shape data 27 for objects between the middle sphere 23 and outer sphere 24 are given over to the display means 16 to be displayed only when an object is an important object. In this way, important objects, such as enemy characters or the like, are displayed even when they are far away (step S8, S9 and S11 in Fig. 3).

As described above, in this embodiment of the invention, objects that are near the point of fixation are selected as objects to be displayed. Therefore, it is possible to keep the number of missing objects that should be displayed to a minimum without having to improve the drawing performance of 3-dimensional graphics.

In the explanation above, whether or not the inner product is greater than a threshold value is determined or not determined, however, the invention is not limited to this. In other words, it is also possible to determine whether or not the inner product is greater than a threshold value in the cases when the display candidates are within the inner sphere 22, between the inner sphere 22 and middle sphere 23, or between the middle sphere 23 and outer sphere 24. Of course, in these cases, it is not necessary to consider whether or not the display candidates are within the inner sphere 22, between the inner sphere 22 and middle sphere 23, or between the middle sphere 23 and outer sphere 24, so it is not necessary to calculate the object-to-viewpoint distance L.

Also, in the explanation above, the inner product is calculated using the center position of the minimum encompassing sphere, however, the invention is not limited to this. That is, if it is possible to find the center position of the object by another method, it is possible to calculate the inner product in a similar way using that center position instead of the center position of the minimum encompassing sphere.

### Embodiment 3

A person is very perceptive to changes in objects that occupy a large percentage of the field of view. Therefore, in this embodiment of the invention, objects that occupy a large percentage of the field of view are selected as objects to be displayed.

Only the points of this embodiment that differ from those of the first embodiment will be explained here.

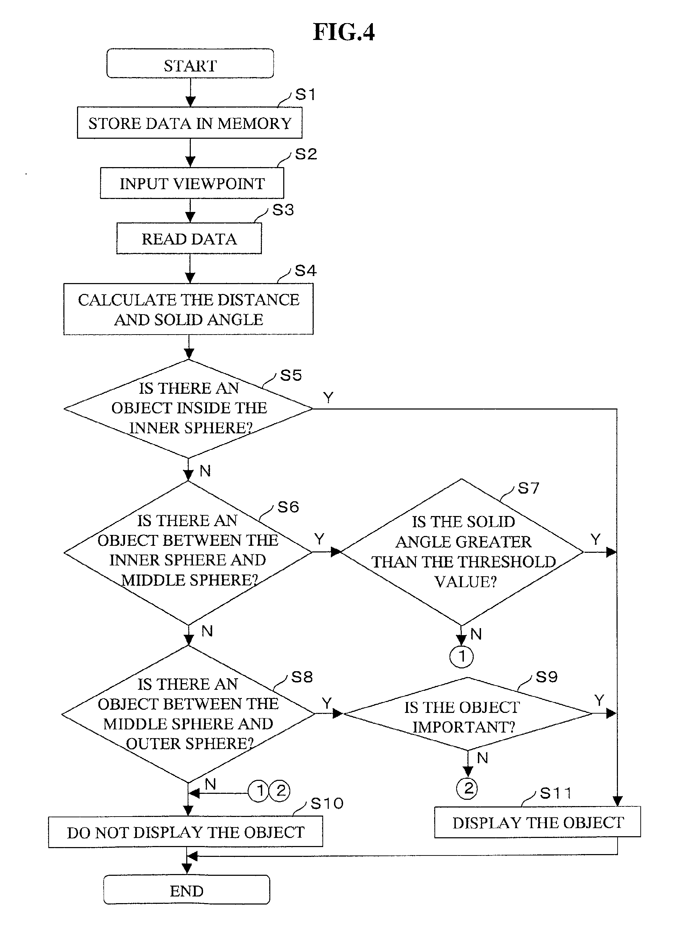

First, the shape data for the objects are given over to the calculation means 14 from the reading means 13 using the same procedure as in the first embodiment. From this the calculation means 14 calculates the solid angles of the objects as seen from the viewpoint. The solid angles that are calculated in this way are then correlated with the shape data 25, 26, 27 and given over to the selection means 15 (step S4 in Fig. 4).

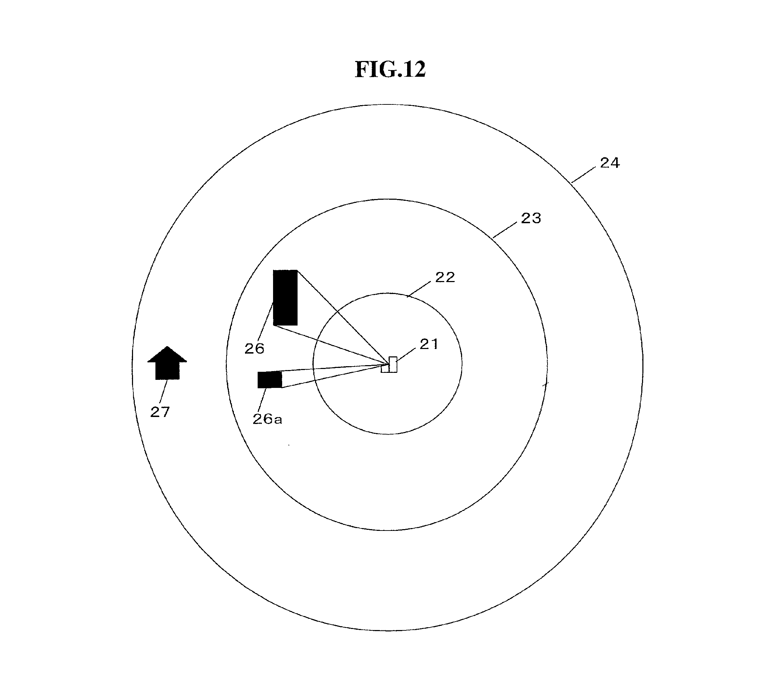

The solid angle expands the concept of the angle to three dimensions. In other words, as shown in Fig. 11, for a conical form Q that is formed by a point O outside the closed contour, and a moving point P that moves along the contour, the area of the surface R that is cut out from a sphere having a radius 1 and whose center is at point O, is taken to be the solid angle of the closed contour S. Needless to say, the larger an object's solid angle is, the larger the percentage of the field of view that the object occupies is.

When calculating the solid angle of an object, it is preferable to use the minimum encompassing sphere of the object rather than the shape data for that object. As will be explained below, by doing this, it is not necessary to calculate the solid angle of that object every time the line of sight changes.

In other words, when applying a method of calculating the solid angle of an object using the shape data, the conical form Q changes as the line of sight changes. Therefore, in that case, it is necessary to calculate the solid angle of the object every time the line of sight changes.

On the other hand, when applying a method of calculating the solid angle of an object using the minimum encompassing sphere, the conical form Q does not change every time the line of sight changes when the viewpoint is constant. Therefore, in that case, it is not necessary to calculate the solid angle of the object every time the line of sight changes.

Next, the selection means 15 selects the objects to display from among the display candidates.

For example, shape data 25 for objects within the inner sphere 22 are given over to a display means 16, such as a display, as objects to be display. In this way, near objects are all displayed regardless of the percentage of the field of view that they occupy (step S5 and S11 in Fig. 4).

Moreover, shape data 26 for objects that are between the inner sphere 22 and middle sphere 23 are given over to the display means 16 as objects to be displayed when their respective solid angles are greater than a threshold value. In this way, objects that occupy a large percentage of the field of view are displayed even though they are far away (steps S6, S7 and S11, in Fig. 4).

For example, as shown in Fig. 12, the shape data 26 for an object that is between the inner sphere 22 and middle sphere 23 are given over to the display means 16 to be displayed when it is determined that the solid angle of that object is greater than a threshold value. On the other hand, shape data 26a for an object that is between the inner sphere 22 and middle sphere 23 are not displayed when it is determined that the solid angle of that object is less than the threshold value.

Furthermore, shape data 27 for an object between the middle sphere 23 and outer sphere 24 is given over to the display means 16 only when that object is an important item. In this way, important objects, such as an enemy character, are displayed even though they are far away (steps S8, S9 and S11 in Fig. 4).

As described above, in this embodiment of the invention, objects that occupy a large percentage of the field of view are selected as objects to be displayed. Therefore, it is possible to keep the number of missing objects that should be displayed to a minimum without having to improve the drawing performance of 3-dimensional graphics.

In the explanation above, whether or not the solid angle is greater than a threshold value is determined or not determined, however, the invention is not limited to this. In other words, it is also possible to determine whether or not the solid angle is greater than a threshold value in the cases when the display candidates are within the inner sphere 22, between the inner sphere 22 and middle sphere 23, or between the middle sphere 23 and outer sphere 24. Of course, in these cases, it is not necessary to consider whether or not the display candidates are within the inner sphere 22, between the inner sphere 22 and middle sphere 23, or between the middle sphere 23 and outer sphere 24, so it is not necessary to calculate the object-to-viewpoint distance L.

### Embodiment 4

Conventionally, near objects as well as far objects were all drawn using a single method. Therefore, the user of a car-navigation apparatus may find that the image displayed on the display does not coincide with the actual scene.

Only the points of this embodiment that differ from those of the first embodiment will be explained here.

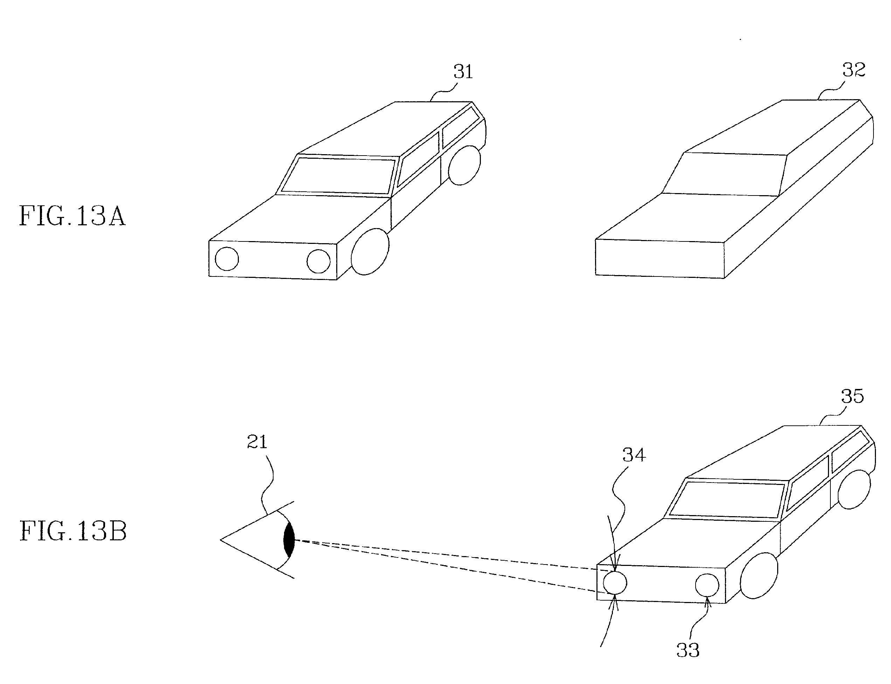

First, as shown in Fig. 13A, high-detail shape data 31 and low-detail shape data 32 for the same object are stored in the memory 11 in advance. The selection means 15 then selects the most suitable shape data from among the two kinds of shape data 31, 32 using the method described below.

For example, as shown in Fig. 13B, the size of an object 35 seen from the viewpoint 21 changes depending on the object-to-viewpoint distance L. In other words, as the object-to-viewpoint distance L increases, the object 35 as seen from the viewpoint 21 becomes smaller.

Therefore, the selection means 15 selects low-detail shape data 32 instead of the high-detail shape data 31 when the diameter 34 of the minimum part 33 of the shape data 31 for the object 35 as seen from the viewpoint 21 becomes less than the minimum picture element of the display means 16.

As described above, in this embodiment of the invention, the most suitable shape data are selected from among a plurality of shape data having different levels of detail. Therefore, it is possible to draw near objects in high detail and far objects in low detail Moreover, there is also a merit in that it is possible to shorten the amount of time required for drawing far objects.

Here, a plurality of shape data having different levels of detail are stored in memory 11 in advance, however, the invention is not limited to this. In other words, it is also possible to store only high detailed shape data, and weight the structural elements of this shape data. By doing so, it is possible to generate low-detail shape data from the high-detail shape data based on this weighting, and so it is possible to obtain the same effect as described above.

### Embodiment 5

As mentioned above, a person is very perceptive to changes in the area near the point where the line of sight is fixed (point of fixation). Therefore, in this embodiment, objects near the point of fixation are drawn in high detail, and objects that are not near the point of fixation are drawn in low detail.

Only the points of this embodiment that differ from those of the second or fourth embodiment will be explained here.

That is, as shown in Fig. 9, the calculation means 14 calculates the inner product of a vector V1 in the direction that connects the position of the viewpoint P0 and the point of fixation P1 and a vector V2 in the direction that connects the position of the viewpoint P0 and the center P2 of the minimum encompassing sphere W (cos θ3, where θ3 is the elongation angle between both vectors V1, V2). Then the calculation means 14 correlates the calculated inner product with the shape data and gives it over to the selection means 15.

Then, based on the inner product that was calculated by the calculation means 14, the selection means 15 selects the most suitable shape data from among a plurality of shape data having different levels of detail to be displayed. In other words, when the inner product is greater than the threshold value, high-detail shape data 31 are selected, and on the other hand, when the inner product is less than the threshold value, low-detail shape data 32 are selected.

As described above, in this embodiment of the invention, the most suitable shape data are selected from among a plurality of shape data having different levels of detail. Therefore, it is possible to draw objects that are near the point of fixation in high detail, and to draw objects that are not near the point of fixation in low detail. In addition, there is a merit in that it is possible to reduce the amount of time required for drawing objects that are not near the point of fixation.

### Embodiment 6

As described above, a person is very perceptive to changes in objects that occupy a large percentage of the field of view. Therefore, in this embodiment, objects that occupy a large percentage of the field of view are drawn in high detail and objects that occupy a small percentage of the field of view are drawn in low detail.

Only the points of this embodiment that differ from those of the third or fourth embodiment will be explained here.

In other words, the calculation means 14 calculates the solid angle of an object as seen from the viewpoint position. Then it correlates the calculated solid angle and gives it over to the selection means 15.

Then, based on the solid angle that was calculated by the calculation means 14, the selection means 15 selects the most suitable shape data from among a plurality of shape data having different levels of detail to be displayed. In other words, when the solid angle is greater than a threshold value, high-detail shape data 31 are selected, and when the solid angle is less than the threshold value, low-detail shape data 32 are selected.

As described above, in this embodiment of the invention, the most suitable shape data are selected from among a plurality of shape data having different levels of detail. Therefore, it is possible to draw objects that occupy a large percentage of the field of view in high detail, and to draw objects that occupy a small percentage of the field of view in low detail. In addition, there is a merit in that it is possible to reduce the amount of time required for drawing objects that occupy a small percentage of the field of view.

### Embodiment 7

In computer graphics, applying a pattern to the surface of an object is called 'texture mapping'. If texture mapping is not performed, the surface of the drawn object just becomes a simple uniform or a shaded (graduated change in density) surface, and a realistic feel is not obtained.

The texture mapping is obtained by applying texture bit mapping to the object and rendering the image. This texture data is often created using paint software or comprises actual photographs or images.

Only the points of this embodiment that differ from those of the first embodiment will be explained here.

First, as shown in Fig. 14A, when it is necessary to draw a wall 41 with a circle pattern, texture data 42 with high resolution and texture data 43 with low resolution are stored in memory 11 in advance. Also, using a method that will be explained below, the selection means 15 selects the most suitable texture data from among the two kinds of texture data 42, 43.

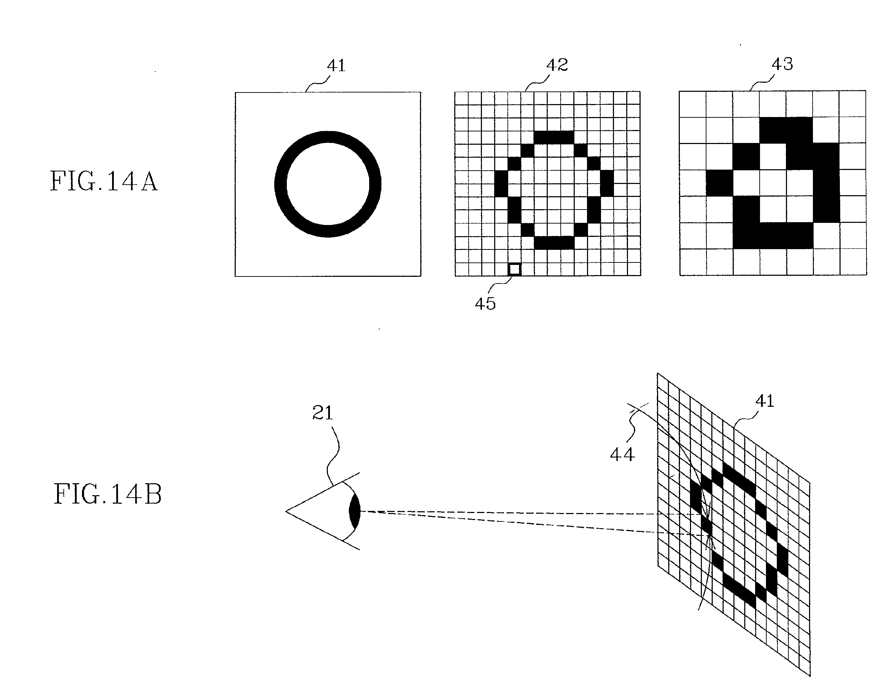

For example, as shown in Fig. 14B, the size of an object 41 that is seen from the viewpoint 21 changes depending on the object-to-viewpoint distance L. In other words, as the object-to-viewpoint distance L increases, the size of the object 41 seen from the viewpoint 21 becomes smaller.

When the selection means 15 has applied texture data 42 with high resolution to the object 41, it then selects texture data 43 with lower resolution in the place of this texture data 42 as the diameter 44 of the texel 45 as seen from the viewpoint becomes smaller than the minimum picture element of the display means 16. The texel 45 is the smallest picture element of the texture data.

As described above, in this embodiment of the invention, the most suitable texture data are selected from among a plurality of texture data having different resolutions. Therefore, it is possible to draw near objects with a realistic feel and draw far objects with a simpler feel.

Here, a plurality of texture data having different resolution is stored in memory 11 in advance, however, the invention is not limited to that. In other words, it is also possible to obtain the same effect by just storing texture data having high resolution in advance and then generating texture data having low resolution based on the stored texture data.

### Embodiment 8

As described above, a person is very perceptive to changes near the point where the line of sight is fixed (point of fixation). Therefore, in this embodiment of the invention, objects near the point of fixation are drawn with a realistic feel, and objects that are not near the point of fixation are drawn more simply.

Only the points of this embodiment that differ from those of the second and seventh embodiments will be explained here.

In other words, as shown in Fig. 9, the calculation means 14 calculates the inner product of a vector V1 in the direction that connects the position of the viewpoint P0 and the point of fixation P1 and a vector V2 in the direction that connects the position of the viewpoint P0 and the center P2 of the minimum encompassing sphere W (cos θ3, where θ3 is the elongation angle between both vectors V1, V2). Then it correlates the inner product that was calculated in this way with the shape data and gives the inner product to the selection means 15.

Then, based on this inner product that was calculated by the calculation means 14, the selection means 15 selects the most suitable texture data from among a plurality of texture data having different resolution to be displayed. In other words, when the inner product is greater than a threshold value, the selection means 15 selects high-resolution texture data 42, and when the inner product is less then the threshold value, it selects low-resolution texture data 43.

As described above, in this embodiment of the invention, the most suitable texture data are selected from among a plurality of texture data having different resolution. Therefore, it is possible to draw objects near the point of fixation with a realistic feel, and to draw objects that are not near the point of fixation more simply.

### Embodiment 9

As described above, a person is perceptive to changes in objects that occupy a large percentage of the field of view. Therefore, in this embodiment, objects that occupy a large percentage of the field of view are drawn with a realistic feel, and objects that occupy a small percentage of the field of view are drawn more simply.

Only the points of this embodiment that differ from those of the third and seventh embodiments will be explained here.

That is, the calculation means 14 calculates the solid angle of an object as seen from the viewpoint position, and then it correlates the calculated solid angle with the shape data and gives that solid angle over to the selection means 15.

Then, based on this solid angle that was calculated by the calculation means 14, the selection means 15 selects the most suitable texture data from among a plurality of texture data having different resolution. In other words, when the solid angle is greater than a threshold value, the selection means 15 selects high-resolution texture data 42, and when the solid angle is less than the threshold value, it selects low-resolution texture data 43.
As described above, in this embodiment of the invention, the most suitable texture data are selected from among a plurality of texture data having different resolution. Therefore, it is possible to draw objects that occupy a large percentage of the field of view with a realistic feel, and to draw objects
that occupy a small percentage of the field of view more simply.

## Claims

1. A display apparatus, which displays objects located in a virtual 3-dimensional space, comprising:
a calculation means of calculating the distance between the viewpoint position when displaying the object and the center position of a minimum encompassing sphere, which is the smallest sphere that contains the object; and
a selection means of selecting the objects to display from among display candidates based on the distance calculated by said calculation means and the diameter or radius of said minimum encompassing sphere.

2. A display apparatus, which displays objects located in a virtual 3-dimensional space, comprising:
a calculation means of calculating the inner product of a vector in the direction connecting the viewpoint position when displaying an object and the center position of the object, and a vector in the direction connecting this viewpoint position and the point of fixation; and
a selection means of selecting the object to display from among display candidates based on the inner product calculated by said calculation means.

3. A display apparatus, which displays objects located in a virtual 3-dimensional space, comprising:
a calculation means of calculating the solid angle of an object as seen from the viewpoint position when displaying the object; and
a selection means of selecting the object to display from among candidates based on the solid angle calculated by said calculation means.

4. A display apparatus, which displays objects located in a virtual 3-dimensional space, comprising:
a calculation means of calculating the distance between the viewpoint position when displaying the object and the center position of a minimum encompassing sphere, which is the smallest sphere that contains the object; and
a selection means of selecting the most suitable shape data to display from among a plurality of shape data having different levels of detail, based on the distance calculated by said calculation means.

5. A display apparatus, which displays objects located in a virtual 3-dimensional space, comprising:
a calculation means of calculating the inner product of a vector in the direction connecting the viewpoint position when displaying an object and the center position of the object, and a vector in the direction connecting this viewpoint position and the point of fixation; and
a selection means of selecting the most suitable shape data to display from among a plurality of shape data having different levels of detail, based on the inner product calculated by said calculation means.

6. A display apparatus, which displays objects located in a virtual 3-dimensional space, comprising:
a calculation means of calculating the solid angle of an object as seen from the viewpoint position when displaying the object; and
a selection means of selecting the most suitable shape data to display from among a plurality of shape data having different levels of detail, based on the solid angle calculated by said calculation means.

7. A display apparatus, which displays objects located in a virtual 3-dimensional space, comprising:
a calculation means of calculating the distance between the viewpoint position when displaying the object and the center position of a minimum encompassing sphere, which is the smallest sphere that contains the object; and
a selection means of selecting the most suitable texture data to display from among a plurality of texture data having different levels of resolution, based on the distance calculated by said calculation means.

8. A display apparatus, which displays objects located in a virtual 3-dimensional space, comprising:
a calculation means of calculating the inner product of a vector in the direction connecting the viewpoint position when displaying an object and the center position of the object, and a vector in the direction connecting this viewpoint position and the point of fixation; and
a selection means of selecting the most suitable texture data to display from among a plurality of texture data having different levels of resolution, based on the inner product calculated by said calculation means.

9. A display apparatus, which displays objects located in a virtual 3-dimensional space, comprising:
a calculation means of calculating the solid angle of an object as seen from the viewpoint position when displaying the object; and
a selection means of selecting the most suitable texture data to display from among a plurality of texture data having different levels of resolution, based on the solid angle calculated by said calculation means.

10. The display apparatus according to claim 1, 4 or 7 wherein
the average value Xa of the maximum X-coordinate and minimum X-coordinate, average value Ya of the maximum Y-coordinate and minimum Y-coordinate, and Za of the maximum Z-coordinate and minimum Z-coordinate of said shape data are found and these coordinates (Xa, Ya, Za) are taken to be the center position of said minimum encompassing sphere, and
the difference Xb between the maximum X-coordinate and minimum X-coordinate, the difference Yb between the maximum Y-coordinate and minimum Y-coordinate and the difference Zb between the maximum Z-coordinate and minimum Z-coordinate of said shape data are found and the maximum value of these values Xb, Yb, Zb is taken to be the diameter of said minimum encompassing sphere.

11. The display apparatus according to claim 2, 5 or 8 wherein
the center position of said object is the center position of the minimum encompassing sphere, which is the smallest sphere that contains said object.

12. The display apparatus according to claim 3, 6 or 9 wherein
the solid angle of said object is the solid angle of the minimum encompassing sphere, which is the smallest sphere that contains said object.

13. A display method of displaying objects located in a virtual 3-dimensional space and comprising:
a method of selecting an object to display from among display candidates based on the distance between the viewpoint position when displaying the object and the center position of the minimum encompassing sphere, which is the smallest sphere that contains the object, and diameter or radius of said encompassing sphere.

14. A display method of displaying objects located in a virtual 3-dimensional space and comprising:
a method of selecting the most suitable shape data to display from among a plurality of shape data having different levels of detail, based on the distance between the viewpoint position when displaying the object and the center position of the minimum encompassing sphere.

15. A display method of displaying objects located in a virtual 3-dimensional space and comprising:
a method of selecting the most suitable texture data to display from among a plurality of texture data having different resolution, based on the distance between the viewpoint position when displaying the object and the center position of the minimum encompassing sphere.

16. A program that is executed by a computer and comprising;
a calculation process of calculating the distance between the viewpoint position when displaying an object and the center position of a minimum encompassing sphere, which is the smallest sphere that contains the object, and
a selection process of selecting objects to display from among display candidates based on said calculated distance and the diameter or radius of said minimum encompassing sphere.

17. A program that is executed by a computer and comprising;
a calculation process of calculating the distance between the viewpoint position when displaying an object and the center position of a minimum encompassing sphere, which is the smallest sphere that contains the object, and
a selection process of selecting the most suitable shape data to display from among a plurality of shape data having different levels of detail based on said calculated distance.

18. A program that is executed by a computer and comprising;
a calculation process of calculating the distance between the viewpoint position when displaying an object and the center position of a minimum encompassing sphere, which is the smallest sphere that contains the object, and
a selection process of selecting the most suitable texture data to display from among a plurality of texture data having different resolution based on said calculated distance.
